# DEMANDE DE BREVET EUROPEEN

(11) **EP 4 350 198 A1**
(43) Date de publication de la demande: **10.04.2024**
(21) Numéro de dépôt: 23201633.7
(22) Date de dépôt: 04.10.2023
(51) Int. Cl.: F17C 1/00

(54) **ENVELOPPE DE CONTENTION DE GAZ PRESSURISÉ, RÉSERVOIR DE GAZ PRESSURISÉ ET PROCÉDÉ DE FABRICATION D'UNE ENVELOPPE DE CONTENTION DE GAZ PRESSURISÉ ASSOCIÉS**

(30) Priorité: 05.10.2022 FR 2210190
(71) Demandeur: Faurecia Systèmes d'Echappement, 92000 Nanterre (FR)
(72) Inventeur: BAVEREL, Christophe, 25400 AUDINCOURT (FR); HERNANDEZ, Dorian, 90100 JONCHEREY (FR); FARALDI, David, 25200 MONTBELIARD (FR); MORET, Marc, 44240 LA CHAPELLE SUR ERDRE (FR); BRANGER, Thomas, 85600 MONTAIGU (FR)
(74) Mandataire: Lavoix

(57) **Abrégé**

Cette enveloppe de contention de gaz pressurisé (12), comprend :
- une première partie (22), comprenant une première coque (30) comprenant un premier bord périphérique (32),
- une deuxième partie (24), comprenant une deuxième coque (36) comprenant un deuxième bord périphérique (38),
- un bandeau (26), étant superposé au premier bord périphérique (32) et au deuxième bord périphérique (38), le bandeau (26) solidarisant la première partie (22) et la deuxième (24) partie l'une à l'autre,
la première partie (22), la deuxième partie (24) et le bandeau (26) délimitant entre eux un volume intérieur (42),
l'enveloppe de contention (12) comprenant en outre,

- au moins un pilier (28), traversant le volume intérieur (42) et connectant la première (30) et la deuxième (36) coques.

## Description

La présente invention concerne une enveloppe de contention de gaz pressurisé. L'invention concerne un réservoir de gaz pressurisé comprenant une telle enveloppe ainsi qu'un procédé de fabrication d'une telle enveloppe.

Dans le domaine des moyens de transports, et en particulier dans l'automobile, il peut s'avérer important de contenir du gaz pressurisé. Ceci s'avère d'autant plus vrai avec l'essor des véhicules munis de piles à combustible, pour lesquels du dihydrogène destiné à alimenter une pile à combustible doit être stocké dans le véhicule.

Il est connu d'utiliser des réservoirs cylindriques pour la contention de gaz pressurisé dans des véhicules. De tels réservoirs sont généralement dotés d'une enveloppe de contention cylindrique, disposée à l'intérieur d'un corps du réservoir, et visant à assurer la contention du gaz pressurisé dans le réservoir.

De telles enveloppes, et plus généralement de tels réservoirs, ne donnent toutefois pas entière satisfaction en raison de leur forme qui est parfois inadaptée à l'aménagement d'un véhicule.

Il a alors été proposé d'utiliser des réservoirs non cylindriques, et par exemple des réservoirs de forme prismatiques. De tels réservoirs présentent généralement la forme d'un prisme aplati permettant d'améliorer l'intégration du réservoir dans le véhicule.

De tels réservoirs ne donnent toutefois pas entière satisfaction. En effet, du fait de leur forme non cylindrique, la robustesse des réservoirs s'avère détériorée. Il a alors été nécessaire de renforcer localement les réservoirs pour améliorer leur robustesse, et d'adapter les enveloppes à de tels renforts. La fabrication de telles enveloppes s'avère toutefois complexe.

Ainsi, l'un des buts de l'invention est de proposer une enveloppe de contention de gaz permettant une intégration facilitée dans un véhicule tout en étant peu complexe à fabriquer et en permettant d'obtenir un réservoir robuste.

A cet effet, l'invention a pour objet une enveloppe de contention de gaz pressurisé, comprenant :
- une première partie, comprenant une première coque comprenant un premier bord périphérique,
- une deuxième partie, comprenant une deuxième coque comprenant un deuxième bord périphérique,
- un bandeau, étant superposé au premier bord périphérique et au deuxième bord périphérique, le bandeau solidarisant la première partie et la deuxième partie l'une à l'autre,
   la première partie, la deuxième partie et le bandeau délimitant entre eux un volume intérieur,
   l'enveloppe de contention comprenant en outre,
- au moins un pilier, traversant le volume intérieur et connectant la première et la deuxième coques.

L'utilisation d'un bandeau solidarisant la première et la deuxième partie ainsi que de piliers connectant ces parties permet un assemblage particulièrement peu complexe d'une enveloppe pouvant accueillir des éléments de renfort afin d'obtenir un réservoir dont la robustesse est améliorée.

Suivant d'autres aspects avantageux de l'invention, l'enveloppe de contention comporte l'une ou plusieurs des caractéristiques suivantes, prise(s) isolément ou suivant toute combinaison techniquement possible :
- le bandeau s'étend au moins partiellement sur une face intérieure de la première coque et/ou de la deuxième coque ;
- le bandeau comprend une portion en saille selon une orientation dirigée à l'écart du volume intérieur, la portion en saillie s'étendant au moins partiellement entre le premier et le deuxième bords périphériques ;
- le pilier est creux, le pilier comprenant une paroi de pilier délimitant une cavité de pilier, le pilier comprenant une ouverture sur la cavité en chacune de ses extrémités, la première coque comprenant un orifice disposé en regard de l'une des ouvertures et la deuxième coque comprenant un orifice disposé en regard de l'autre des ouvertures ;
- la cavité de pilier présente en chacune de ses extrémités un élargissement vers chacune des ouvertures ;
- le pilier comprend une première extrémité évasée connectée à la première coque et une deuxième extrémité évasée connectée à la deuxième coque, la section extérieure de la première extrémité évasée s'élargissant vers la première coque et la section extérieure de la deuxième extrémité évasée s'élargissant vers la deuxième coque ;
- la première et la deuxième partie sont réalisées en un matériau configuré pour être transparent à un rayonnement laser, le pilier et le bandeau étant réalisés en un matériau configuré pour absorber le rayonnement laser, le bandeau et le pilier étant soudés à la première partie et à la deuxième partie par soudage laser ; et
- le bandeau et le pilier sont solidarisés à la première partie et à la deuxième partie par soudage bord à bord, une feuille résistive étant disposée entre des bords adjacents du bandeau et de la première ou la deuxième partie et/ou entre des bords adjacents du pilier et de la première ou de la deuxième partie.

L'invention concerne en outre un réservoir de gaz pressurisé comprenant une enveloppe telle que précitée, et un corps de réservoir disposé autour de l'enveloppe, une face interne du corps de réservoir étant apposé à une face externe de l'enveloppe.

L'invention concerne en outre un procédé de fabrication d'une enveloppe de contention d'un gaz pressurisé telle que précitée, comprenant les étapes suivantes :
- fourniture d'une première partie, d'une deuxième partie, d'un pilier, et d'un bandeau;
- solidarisation du pilier à la première et à la deuxième parties et solidarisation du bandeau à la première et à la deuxième parties.

L'invention sera mieux comprise à la lecture de la description qui va suivre, donnée uniquement à titre d'exemple non limitatif et faite en se référant aux dessins sur lesquels :
[Fig 1] la figure 1 est une vue en perspective partielle d'un réservoir comprenant une enveloppe selon l'invention, lors de la fabrication du réservoir ;
[Fig 2] la figure 2 est une vue en coupe transversale du réservoir de la figure 1 selon un plan de coupe II-II, la fabrication du réservoir étant terminée ;
[Fig 3] la figure 3 est une vue en perspective du réservoir de la figure 1 dans son entièreté ; et
[Fig 4] la figure 4 est une vue en coupe selon le plan II-II d'un détail de la solidarisation entre deux partie d'une enveloppe selon un mode de réalisation alternatif au mode de réalisation présenté sur les figures 1 à 3.

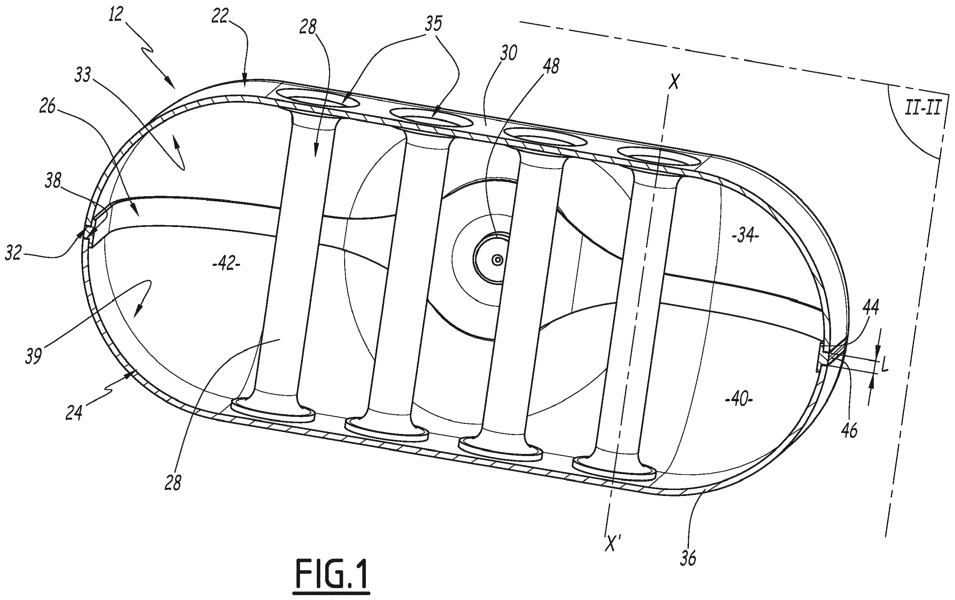

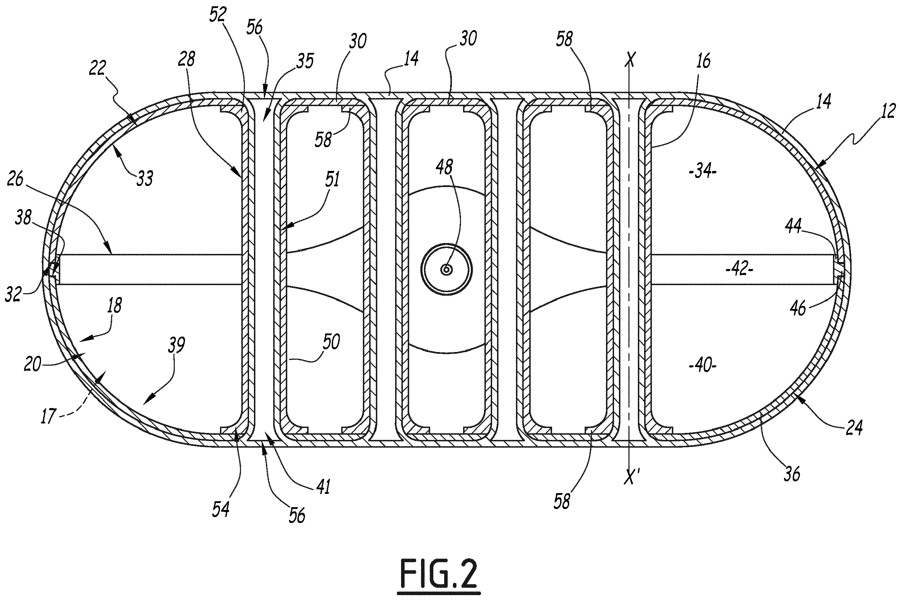

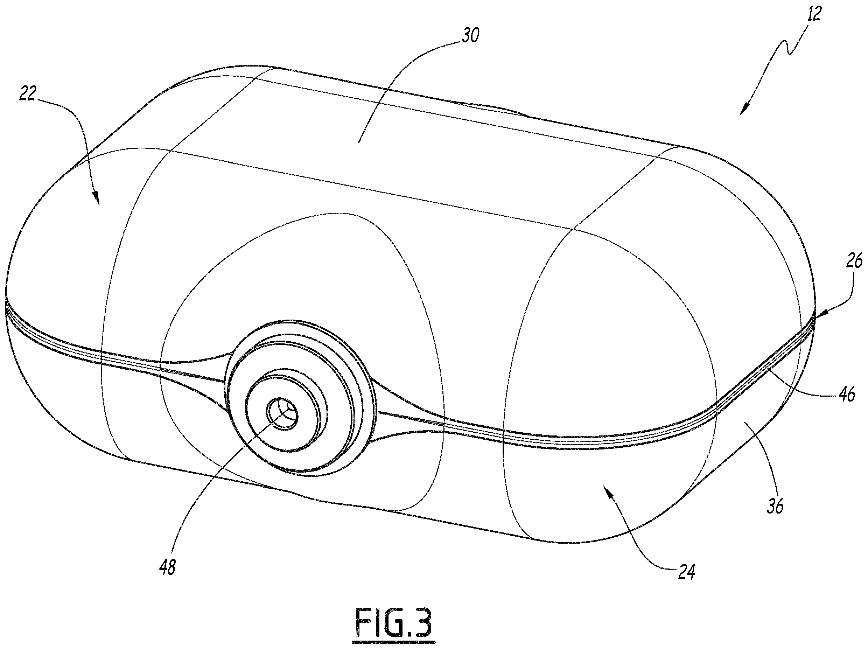

En référence aux figures 1 à 3, un réservoir de gaz pressurisé 10 comprend une enveloppe de contention de gaz pressurisé 12. Comme visible sur la figure 2, le réservoir 10 comprend en outre un corps de réservoir 14 ainsi qu'au moins une colonne de réservoir 16.

Le réservoir de gaz pressurisé 10 est configuré pour contenir un gaz pressurisé tel par exemple un gaz combustible réducteur et tel notamment de l'hydrogène pressurisé. Le réservoir de gaz pressurisé 10 est par exemple configuré pour contenir un gaz à une pression supérieure à 200 bar et par exemple un gaz à une pression de 350 bar ou un gaz à une pression de 700bar. Le réservoir de gaz pressurisé 10 est en outre par exemple configuré pour contenir un liquide, tel par exemple une phase liquide du gaz pressurisé contenu dans le réservoir 10.

Le réservoir de gaz pressurisé 10 est par exemple destiné à être installé dans un véhicule et par exemple un véhicule automobile. Le réservoir de gaz pressurisé 10 est par exemple configuré pour alimenter en combustible une pile à combustible du véhicule (non représentée).

Le corps de réservoir 14 forme par exemple un volume de corps 17 dans laquelle est logée l'enveloppe 12. Le corps de réservoir 14 comprend par exemple une face interne 18 définissant le volume de corps 17. Le corps de réservoir 14 est par exemple réalisé autour de l'enveloppe 12 de sorte à ce que l'enveloppe 12 soit disposée dans le corps de réservoir 14, la face interne 18 étant par exemple apposée à une face externe 20 de l'enveloppe.

Le corps de réservoir 14 est par exemple réalisé en composite. Le composite à partir duquel le corps de réservoir 14 est réalisé comprend par exemple une résine telle : une résine époxy, ou une résine réalisée à partir d'au moins un polymère thermoplastique choisi dans le groupe constitué par les polyoléfines, notamment le polypropylène, les polyamides, notamment les polyamides aliphatiques, tels que le polycaprolactame PA 6, le polyhexaméthylène adipamide PA 6.6, les polycarbonates, les PAEK (Polyaryléthercétone) dont font partie le PEEK (polyétheréthercétone) et le PEKK (polyéthercétonecétone), les matières sur base acrylique type PMMA (notamment la résine connue sous le nom d'ELIUM), les PEI (Polyétherimide également connu sous le nom d'ULTEM), le PPS (Polysulfure de phénylène), l'ABS (acrylonitrile butadiène styrène), le PLA (acide polylactique), le TPU (polyuréthane thermoplastique) et le PET (polyéthylène), et leurs mélanges.

Le composite à partir duquel le corps de réservoir 14 est réalisé comprend par exemple un renfort réalisé en : des fibres choisies dans le groupe constitué par les fibres de carbone, les fibres Kevlar, les fibres de verre, les fibres de céramique, les fibres de matériau polymère, par exemple thermoplastique, notamment les fibres d'aramide ou de polyester, les fibres d'origine végétale, notamment les fibres de lin, les fibres métalliques, les fibres étant de préférence des fibres de carbone, ou un mélange de telles fibres.

Comme visible sur la figure 2, chaque colonne de réservoir 16 s'étend dans le volume de corps 17 et connecte par exemple des portions de la face interne 18 du corps de réservoir 14 opposées l'une à l'autre relativement au volume de corps 17.

Chaque colonne de réservoir 16 est par exemple soudée au corps de réservoir 18 en chacune des extrémités de la colonne 16 et/ou réalisée de sorte à former un seul bloc avec le corps de réservoir 14.

Chaque colonne de réservoir 16 est par exemple réalisé en composite. Le composite à partir duquel chaque colonne de réservoir 16 est réalisée comprend par exemple une résine telle : une résine époxy, ou une résine réalisée à partir d'au moins un polymère thermoplastique choisi dans le groupe constitué par les polyoléfines, notamment le polypropylène, les polyamides, notamment les polyamides aliphatiques, tels que le polycaprolactame PA 6, le polyhexaméthylène adipamide PA 6.6, les polycarbonates, les PAEK (Polyaryléthercétone) dont font partie le PEEK (polyétheréthercétone) et le PEKK (polyéthercétonecétone), les matières sur base acrylique type PMMA (notamment la résine connue sous le nom d'ELIUM), les PEI (Polyétherimide également connu sous le nom d'ULTEM), le PPS (Polysulfure de phénylène), l'ABS (acrylonitrile butadiène styrène), le PLA (acide polylactique), le TPU (polyuréthane thermoplastique) et le PET (polyéthylène), et leurs mélanges.

Le composite à partir duquel chaque colonne de réservoir 16 est réalisé comprend par exemple un renfort réalisé en : des fibre choisies dans le groupe constitué par les fibres de carbone, les fibres Kevlar, les fibres de verre, les fibres de céramique, les fibres de matériau polymère, par exemple thermoplastique, notamment les fibres d'aramide ou de polyester, les fibres d'origine végétale, notamment les fibres de lin, les fibres métalliques, les fibres étant de préférence des fibres de carbone, ou un mélange de telles fibres.

Dans un mode de réalisation particulier, le matériau des colonnes de réservoir 16 est le même que le matériau du corps de réservoir 14.

Comme illustré sur la figure 2, chaque colonne de réservoir 16 est par exemple creuse.

Comme vu plus haut, l'enveloppe 12 est par exemple disposée dans le volume de corps 17.

L'enveloppe 12 est configurée pour assurer l'étanchéité du réservoir 10 au gaz pressurisé tandis que le corps de réservoir 14 est configuré pour assurer la résistance à la pression du gaz pressurisé.

Comme illustré sur les figures 1 et 2, l'enveloppe 12 comprend une première partie 22, une deuxième partie 24, un bandeau 26 et au moins un pilier 28.

Comme illustré sur les figures 1 et 2, l'enveloppe 12 comprend de préférence une pluralité de piliers 28 et par exemple au moins quatre piliers.

La première partie 22, la deuxième partie 24, le bandeau 26 et l'au moins un pilier 28 sont par exemple réalisées en un matériau thermoplastique choisi dans la liste consistant en ABS (Acrylonitrile butadiène styrène), PA (polyamide), PE (Polyethylene), PC (polycarbonate), PP (polypropène), PMMA (poly méthacrylate de méthyle acrylique), PS (Polystyrène Expansé), PBT (Polytéréphtalate de butylène). Le matériau de la première partie 22, de la deuxième partie 24, du bandeau 26 et de l'au moins un pilier 28 est par exemple plus particulièrement choisi dans la liste consistant en : PA6 (Polycaprolactame), PA11 (polyundécanamide) ou PA12 (Nylon 12).

Comme cela sera décrit plus en détails par la suite, le matériau thermoplastique choisi pour réaliser la première partie 22, la deuxième partie 24, le bandeau 26 ou l'au moins un pilier 28 peut comprendre un additif.

Comme illustré sur les figures 1 et 2, la première partie 22 comprend une première coque 30 comprenant un premier bord périphérique 32 et une face intérieure 33. La première coque 30, et plus particulièrement la face intérieure 33 de la première coque, délimite un premier espace concave 34, ouvert selon le premier bord périphérique 32. Comme cela sera décrit plus en détails par la suite, la première coque 30 comprend par exemple au moins un orifice 35 débouchant sur le premier espace concave 34 à l'opposé du premier bord périphérique 32.

Comme illustré sur les figures 1 et 2, la deuxième partie 24 comprend une deuxième coque 36 comprenant un deuxième bord périphérique 38 et une face intérieure 39. La deuxième coque 36, et plus particulièrement la face intérieure 39 de la deuxième coque 36, délimite un deuxième espace concave 40, ouvert selon le deuxième bord périphérique 38. Comme cela sera décrit plus en détails par la suite, la deuxième coque 36, comprend par exemple au moins un orifice 41 débouchant sur le deuxième espace concave 40 à l'opposé du deuxième bord périphérique 38.

La première partie 22 et la deuxième partie 24 sont disposées l'une en face de l'autre, le premier bord périphérique 32 étant par exemple disposé en regard du deuxième bord périphérique 38. Le premier espace concave 34 et le deuxième espace concave 40 débouchent alors l'un en face de l'autre.

Le bandeau 26 est superposé au premier bord périphérique 32 et au deuxième bord périphérique 40. En d'autres termes, le bandeau 26 s'étend en regard de chacun des premier 32 et deuxième bords périphériques 40. Le bandeau 26 connecte en particulier le premier bord périphérique 32 et le deuxième bord périphérique 40.

Comme illustré sur les figures 1 et 2, le bandeau 26 solidarise la première partie 22 et la deuxième partie 24.

La première partie 22, la deuxième partie 24 et le bandeau 26 délimitent entre eux un volume intérieur 42. Le volume intérieur 42 ainsi délimité est configuré pour être occupé par le gaz pressurisé.

Le bandeau 26 s'étend par exemple au moins partiellement sur la face intérieure 33 de la première coque 30 et/ou sur la face intérieure 39 de la deuxième coque 36.

Dans l'exemple des figures 1 à 3, le bandeau 26 s'étend sur la face intérieure 33 de la première coque 30 le long du premier bord périphérique 32, et s'étend ainsi partiellement dans le premier espace concave 34. Le bandeau 26 s'étend en outre sur la face intérieure 39 de la deuxième coque 36 le long du deuxième bord périphérique 38 et s'étend ainsi partiellement dans le deuxième espace concave 40.

Comme visible sur les figures 1 et 2, le bandeau 26 comprend par exemple une portion intérieure 44 et une portion en saillie 46. Le bandeau 26 accueille par exemple au moins un port 48 d'accès au volume intérieur 42. Dans l'exemple des figures 1 à 3, le bandeau accueille deux ports 48 d'accès au volume intérieur 42.

La portion en saillie 46 fait saille de la portion intérieure 44 à l'écart du volume intérieur 42. La portion en saillie 46 s'étend par exemple au moins partiellement entre le premier bord périphérique 32 et le deuxième bord périphérique 38.

Comme visible sur les figures 1 à 3, une largueur L de la portion en saille 46 correspond à l'écartement entre la première partie 22 et la deuxième partie 24, et en particulier entre le premier bord périphérique 32 et le deuxième bord périphérique 38.

Comme visible sur les figures 1 et 2, la largueur L de la portion en saille 46 est variable le long des bords périphériques 32, 38. En particulier, et comme cela sera décrit plus en détails par la suite, la largeur L est maximale autour de l'au moins un port d'accès 48.

La portion intérieure 44 déborde par exemple de part et d'autre de la portion en saillie 46 sur la face intérieure 33 de la première coque 30 et sur la face intérieure 39 de la deuxième coque 36, tout le long du premier bord périphérique 32 et du deuxième bord périphérique 38.

Comme illustré sur les figures 1 et 2, le port 48 est disposée au travers du bandeau 26. Le port 48 est par exemple disposé au travers de la portion en saillie 46. Chaque port 48 du réservoir 10 est par exemple logé dans le bandeau 48 pour permettre l'accès au volume intérieur 42, par exemple pour le remplissage et/ou le vidage du volume intérieur 42 en gaz pressurisé.

Comme illustré sur les figures 1 et 2, l'au moins un pilier 28 traverse le volume intérieur 42 et connecte la première coque 30 et la deuxième coque 36.

Le pilier 28 est par exemple allongé selon un axe d'élongation X-X' entre sa première extrémité 52 et sa deuxième extrémité 54, la première extrémité 52 du pilier 28 étant connectée à la première coque 30 et la deuxième extrémité 54 du pilier 28 étant connectée à la deuxième coque 36.

Le pilier 28 est par exemple creux. Le pilier 28 comprend par exemple une paroi de pilier 50 délimitant une cavité de pilier 51. Le pilier 28 comprend alors par exemple une ouverture 56 sur la cavité 51 en chacune de ses extrémités 52, 54. L'orifice 35 de la première coque 30 est alors par exemple disposé en regard de l'une des ouvertures 56, l'orifice 41 de la deuxième coque 36 étant alors par exemple disposé en regard de l'autre des ouvertures 56.

Comme illustré sur la figure 2, une colonne de réservoir 16 est par exemple logée dans la cavité 51 de chaque pilier 28, la colonne de réservoir 16 débordant par exemple de part et d'autre de la cavité 51 au travers des ouvertures 56. La colonne 16 ainsi logée traverse en outre par exemple la première coque 30 et la deuxième coque 36 au travers des orifices 35, 41 de ces coques 30, 36, la colonne 16 étant ainsi connectée au corps de réservoir 14 de part et d'autre de l'enveloppe 12.

Comme visible sur la figure 2, la cavité de pilier 51 présente par exemple en chacune de ses extrémités, c'est-à-dire en chacune des extrémités 52, 54 du pilier, un élargissement 58 vers chacune de ses ouvertures 56.

Comme illustré sur la figure 2, la première extrémité 52 et la deuxième extrémité 54 sont en outre par exemple évasées, la section extérieure de la première extrémité 52 s'élargissant ainsi vers la première coque 30 et la section extérieure de la deuxième extrémité 54 s'élargissant ainsi vers la deuxième coque 36.

Comme illustré sur la figure 2, l'élargissement 58 de la cavité 51 en chacune de ses extrémités correspond par exemple à l'évasement de la section extérieure en chacune des extrémités 52, 54, la paroi de pilier étant d'épaisseur sensiblement constante tout le long du pilier 28.

Dans l'exemple illustré sur les figures 1 à 3, le première partie 22 et la deuxième partie 24 sont réalisées dans un matériau configuré pour être transparent à un rayonnement laser. Le pilier 28 et le bandeau 26 sont en outre réalisés en un matériau configuré pour absorber un rayonnement laser.

Le matériau configuré pour être transparent à un rayonnement laser est par exemple réalisé dans l'un des matériaux thermoplastiques présentés plus haut, ledit matériau thermoplastique étant dépourvu d'additif d'absorption de lumière.

Le matériau configuré pour absorber un rayonnement laser est par exemple réalisé dans l'un des matériaux thermoplastiques présentés plus haut, ledit matériau thermoplastique comprenant un additif d'absorption de lumière, tel par exemple du carbone.

Dans un mode de réalisation particulier, le matériau configuré pour être transparent à un rayonnement laser et le matériau configuré pour absorber un rayonnement laser sont réalisés à l'aide d'un même matériau thermoplastique, la différence entre ces matériaux étant que le matériau configuré pour absorber un rayonnement laser est traité à l'aide d'un additif d'absorption de lumière tandis que le matériau configuré pour être transparent à un rayonnement laser n'est pas traité à l'aide d'un tel additif.

Le bandeau 26 et le pilier 28 sont alors soudés à la première partie 22 et à la deuxième partie 24 par soudage laser.

Le bandeau 26 est ainsi soudé d'une part à la première partie 22 et d'autre part à la deuxième partie 24 par soudage laser. En particulier, la portion intérieure 44 du bandeau 26 est par exemple soudée aux faces intérieures 33, 39 au travers des coques 30, 36, le long des bords périphériques 32, 38, par soudage laser.

Le pilier 28 est ainsi soudé d'une part à la première partie 22 et d'autre part à la deuxième partie par soudage laser. En particulier, les extrémités 52, 54 du pilier sont par exemple soudées aux faces intérieures 33, 39 au travers des coques 30, 36, autour des orifices 41 par soudage laser.

Un deuxième mode de réalisation d'une enveloppe 12 de contention de gaz pressurisé va maintenant être présenté. Selon ce deuxième mode de réalisation, l'enveloppe 12 diffère du mode de réalisation précédemment présenté par ce qui suit. Les éléments analogues portent les mêmes références.

Dans ce deuxième mode de réalisation le bandeau 26 et le pilier 28 ne sont pas solidarisés à la première partie 22 et à la deuxième partie 24 par soudage laser, mais sont solidarisés à la première partie 22 et à la deuxième partie 24 par soudage bord à bord.

A cet effet, les piliers 28 et le bandeau 26 ne sont pas nécessairement réalisés en un matériau configuré pour absorber un rayon laser et la première 22 et la deuxième 24 parties ne sont pas nécessairement réalisées un matériau configuré pour être transparent à un rayonnement laser.

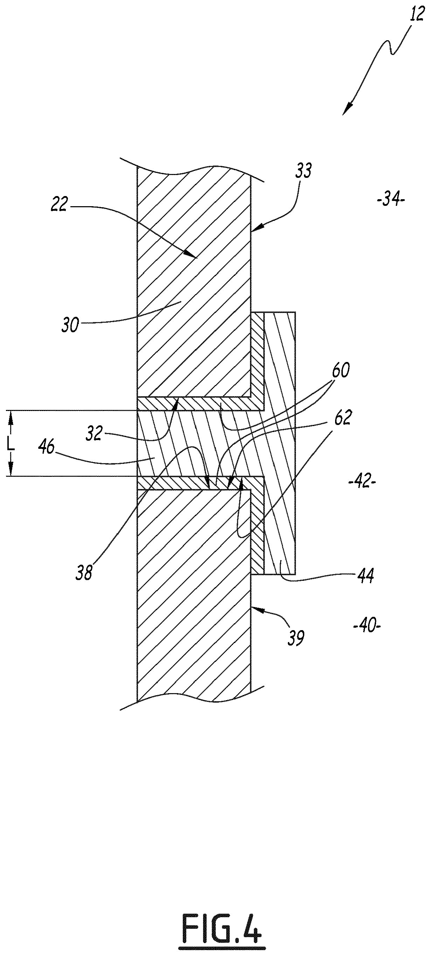

Dans ce mode de réalisation, et comme illustré en figure 4, une feuille résistive 60 est disposée entre des bords adjacents 62 du bandeau et de la première 22 ou la deuxième 24 partie et/ou entre des bords adjacents (non représentés) du pilier 28 et de la première 22 ou de la deuxième 24 partie. Dans le mode de réalisation illustré en figure 4, une première feuille résistive 60 s'étend entre un premier flanc de la portion en saillie 46 et le premier bord périphérique 32 d'une part, et entre un deuxième flanc de ladite portion en saillie 46 et le deuxième bord périphérique 38. Dans ce mode de réalisation, la feuille résistive 60 s'étend en outre entre la portion intérieure 44 d'une part et les faces intérieures 33, 39 d'autre part.

Un troisième mode de réalisation d'une enveloppe 12 de contention de gaz pressurisé va maintenant être présenté. Selon ce troisième mode de réalisation, l'enveloppe 12 diffère des modes de réalisation précédemment présentés par ce qui suit. Les éléments analogues portent les mêmes références.

Dans ce troisième mode de réalisation, la première partie 22, le bandeau 26 et le pilier 28 ne sont ni solidarisés à la première partie 22 et à la deuxième partie 24 par soudage bord à bord, ni par soudage laser, mais sont solidarisés par soudage à gaz chaud.

A cet effet, les piliers 28 et le bandeau 26 ne sont pas nécessairement réalisés en un matériau configuré pour absorber un rayon laser et la première 22 et la deuxième 24 parties ne sont pas nécessairement réalisées un matériau configuré pour être transparent à un rayonnement laser. Aucune feuille résistive n'est en outre disposée les bords adjacents 62 du bandeau 26 et de la première 22 ou la deuxième 24 partie et/ou entre les bords adjacents 62 du pilier 28 et de la première 22 ou de la deuxième partie 24.

Le bandeau 26 est par exemple solidarisé à la première coque 30 et à la deuxième coque 36 par chauffage de portions du bandeau 26 et/ou de portion des coques 30, 36 adjacentes et/ou superposée, par chauffage à l'aide d'un gaz chaud, tel de l'air chaud.

Un procédé de fabrication d'une enveloppe 12 de contention de gaz pressurisé telle que décrite plus haut va maintenant être présenté.

Lors d'une première étape, une première partie 22, une deuxième partie 24, un pilier 28 et un bandeau 26 sont fournis.

Lors d'une seconde étape, le pilier 28 est solidarisé à la première partie 22 et à la deuxième partie 24 et le bandeau 26 est solidarisé à la première partie 22 et à la deuxième partie 24.

Selon le premier mode de réalisation présenté plus haut, la solidarisation du pilier 28 à la première partie 22 et à la deuxième partie 24, et la solidarisation du bandeau 26 à la première partie 22 et à la deuxième partie 24, est effectuée par soudage laser. A cet effet, un faisceau laser est pointé sur le pilier 28, absorbant le rayon laser, au travers de la première partie 22 et de la deuxième partie 24, transparentes au rayon laser. Le chauffage local du pilier 28 associé à l'absorption du rayon laser provoque une fusion locale du pilier ainsi que des portions de la première partie 22 et de la première partie 24 adjacentes au portions localement fondues du pilier 28, résultant en la solidarisation par soudure laser du pilier 28 et des première 22 et deuxième 24 parties. De la même manière, un faisceau laser est pointé sur le bandeau 26, absorbant le rayon laser, au travers de la première partie 22 et de la deuxième partie 24, transparentes au rayon laser, résultant en une solidarisation par soudure laser du bandeau 26 et des première 22 et deuxième 24 parties.

Selon le deuxième mode de réalisation, présenté plus haut, la solidarisation du pilier 28 à la première partie 22 et à la deuxième partie 24, et la solidarisation du bandeau 26 à la première partie 22 et à la deuxième partie 24, est effectuée par soudage bord à bord. La feuille résistive 60 est disposée entre les bords adjacents 62 du bandeau et de la première 22 ou la deuxième 24 partie et entre des bords adjacents (non représentés) du pilier 28 et de la première 22 ou de la deuxième 24 partie. Un courant est alors généré au travers de la feuille résistive 60 pour son chauffage par effet Joule. Les bords adjacents 62 sont ainsi chauffés, résultant en une soudure des bords adjacents 62 à la feuille résistive 60.

Selon le troisième mode de réalisation, présenté plus haut, la solidarisation du pilier 28 à la première partie 22 et à la deuxième partie 24, et la solidarisation du bandeau 26 à la première partie 22 et à la deuxième partie 24, sont effectuées par soudage à gaz chaud.

Le chauffage de parties adjacentes pour leur fusion locale et pour la soudure qui en résulte est alors réalisé par l'intermédiaire d'un jet de gaz chaud.

On comprendra que les différents modes de soudure présentés dans les trois modes de réalisation plus haut peuvent être combinés et sont par exemple interchangeables. Par exemple, le bandeau 26 est soudé à la première partie 22 et à la deuxième partie 24 par soudage bord à bord et le pilier 28 est solidarisé à la première partie 22 et à la deuxième partie 24 par soudage laser.

## Revendications

1. Enveloppe de contention de gaz pressurisé (12), comprenant :
- une première partie (22), comprenant une première coque (30) comprenant un premier bord périphérique (32),
- une deuxième partie (24), comprenant une deuxième coque (36) comprenant un deuxième bord périphérique (38),
- un bandeau (26), étant superposé au premier bord périphérique (32) et au deuxième bord périphérique (38), le bandeau (26) solidarisant la première partie (22) et la deuxième (24) partie l'une à l'autre,
la première partie (22), la deuxième partie (24) et le bandeau (26) délimitant entre eux un volume intérieur (42),
l'enveloppe de contention (12) comprenant en outre,
- au moins un pilier (28), traversant le volume intérieur (42) et connectant la première (30) et la deuxième (36) coques.

2. Enveloppe (12) selon la revendication 1, dans laquelle le bandeau (26) s'étend au moins partiellement sur une face intérieure (33, 39) de la première coque (30) et/ou de la deuxième coque (36).

3. Enveloppe (12) selon la revendication 1 ou 2, dans laquelle le bandeau (26) comprend une portion en saille (46) selon une orientation dirigée à l'écart du volume intérieur (42), la portion en saillie (46) s'étendant au moins partiellement entre le premier (32) et le deuxième (38) bords périphériques.

4. Enveloppe (12) selon l'une quelconque des revendications précédentes, dans laquelle le pilier (28) est creux, le pilier (28) comprenant une paroi de pilier (50) délimitant une cavité de pilier (51), le pilier (28) comprenant une ouverture (56) sur la cavité (51) en chacune de ses extrémités (52, 54), la première coque (30) comprenant un orifice (35) disposé en regard de l'une des ouvertures (56) et la deuxième coque (36) comprenant un orifice (41) disposé en regard de l'autre des ouvertures (56).

5. Enveloppe (12) selon la revendication 5, dans laquelle la cavité de pilier (51) présente en chacune de ses extrémités un élargissement (58) vers chacune des ouvertures (56).

6. Enveloppe (12) selon l'une quelconque des revendications précédentes, dans laquelle le pilier comprend une première extrémité (52) évasée connectée à la première coque (30) et une deuxième extrémité (54) évasée connectée à la deuxième coque (36), la section extérieure de la première extrémité évasée (52) s'élargissant vers la première coque (30) et la section extérieure de la deuxième extrémité évasée (54) s'élargissant vers la deuxième coque (36).

7. Enveloppe (12) selon l'une quelconque des revendications précédentes, dans laquelle la première (22) et la deuxième partie (24) sont réalisées en un matériau configuré pour être transparent à un rayonnement laser, le pilier (28) et le bandeau (26) étant réalisés en un matériau configuré pour absorber le rayonnement laser, le bandeau (26) et le pilier (28) étant soudés à la première partie (22) et à la deuxième partie (24) par soudage laser.

8. Enveloppe (12) selon l'une quelconque des revendications 1 à 6, dans laquelle le bandeau (26) et le pilier (28) sont solidarisés à la première partie (22) et à la deuxième partie (24) par soudage bord à bord, une feuille résistive (60) étant disposée entre des bords adjacents (62) du bandeau (26) et de la première (22) ou la deuxième (24) partie et/ou entre des bords adjacents du pilier (28) et de la première (22) ou de la deuxième partie (24).

9. Réservoir de gaz pressurisé (10) comprenant une enveloppe (12) selon l'une quelconque des revendications précédentes, et un corps de réservoir (14) disposé autour de l'enveloppe (12), une face interne (18) du corps de réservoir (14) étant apposé à une face externe (20) de l'enveloppe (12).

10. Procédé de fabrication d'une enveloppe de contention d'un gaz pressurisé (12) selon l'une quelconque des revendications 1 à 8, comprenant les étapes suivantes :
- fourniture d'une première partie (22), d'une deuxième partie (24), d'un pilier (28), et d'un bandeau (26);
- solidarisation du pilier (28) à la première (22) et à la deuxième (24) parties et solidarisation du bandeau (256) à la première (22) et à la deuxième (24) parties.
